# EUROPÄISCHE PATENTSCHRIFT

(11) **EP 2 312 288 B1**
(45) Veröffentlichungstag und Bekanntmachung des Hinweises auf die Patenterteilung: **05.12.2012**
(21) Anmeldenummer: 09173290.9
(22) Anmeldetag: 16.10.2009
(51) Int. Cl.: G01K 7/16

(54) **Temperatursensor mit Multilayer-Leiterplatine**
Temperature sensor with multi-layer circuit board
Capteur de température doté d'une platine conductrice multicouche

(43) Veröffentlichungstag der Anmeldung: 20.04.2011
(73) Patentinhaber: JUMO GmbH & Co. KG, 36039 Fulda (DE)
(72) Erfinder: Wolf, Andreas, 63840, Hausen (DE)
(74) Vertreter: Wess, Wolfgang

(56) Entgegenhaltungen:
- DE-A1- 10 104 493
- DE-A1-102006 025 179
- DE-C1- 19 936 924

## Beschreibung

Die Erfindung betrifft einen elektrischen Sensor mit einer Leiterplatine und einem auf der Leiterplatine angeordneten Sensorelement. Das Sensorelement ist vorzugsweise ein SMD-Bauteil. Der Sensor kann insbesondere ein Temperatursensor und das Sensorelement ein temperaturabhängiger Messwiderstand sein.

Temperatursensoren, wie die Erfindung sie insbesondere betrifft, weisen eine langgestreckte Leiterplatine und auf der Leiterplatine einen temperaturabhängigen Messwiderstand als Sensorelement sowie äußere Anschlusskontakte für den Anschluss der Leiterplatine und insbesondere des Sensorelements an eine oder mehrere weitere elektrische Baugruppe(n), beispielsweise eine Auswerteelektronik, auf. Üblicherweise ist das Sensorelement über auf der Oberseite oder Unterseite der Leiterplatine verlaufende Leiterbahnen mit den äußeren Anschlusskontakten verbunden. Die Leiterplatine besteht typischerweise aus einem Kunststoffmaterial. Sensoren dieser Art sind einfach und preiswert herstellbar und decken ein weites Anwendungsfeld ab. Ein Beispiel wird in der EP 0 905 493 A1 beschrieben.

Nach der EP 0 809 093 A1 kann solch ein Sensor zum Schutz gegen ungünstige Umgebungsbedingungen mit einer Kunststoffumhüllung versehen sein, die als Primärgehäuse dient, und das Primärgehäuse mit einer zusätzlichen Kunststoff-Umspritzung als Außengehäuse umgeben werden. Die doppelte Umhüllung erhöht den Preis, zudem ist ein Umspritzen nicht unproblematisch und beschränkt die Auswahl von Messwiderständen.

Aus der DE 44 45 243 A1 ist ein unter schwierigen Bedingungen, beispielsweise hohen Temperaturen und korrosiven Gasen einsetzbarer Temperatursensor bekannt, dessen Messwiderstand zwischen zwei Keramikschichten eingebettet ist. Die Keramikschichten werden zusammen laminiert, gepresst und bei hohen Temperaturen gebrannt, um ein einheitliches Keramiksubstrat zu bilden. Das auf diese Weise eingebettete Sensorelement ist über zwischen den Keramikschichten verlaufende Leiterbahnen mit äußeren Anschlusskontakten verbunden. Die Leiterbahnen werden im Bereich der äußeren Anschlusskontakte zwischen den Keramikschichten nach außen und über äußere Seitenflächen des Keramiksubstrats zu den auf der Ober- und Unterseite befindlichen Anschlusskontakten geführt. Der aufwendigen Herstellung und damit einhergehend des hohen Preises wegen sind derartige Sensoren dem Einsatz unter schwierigen Umgebungsbedingungen vorbehalten.

Aus der DE 10 2006 025 179 A1 ist eine Sensoranordnung für eine genaue Temperaturmessung an einem Rohr bekannt, die eine bügelförmige Halterung und einen dam angeordneten Messkopf umfasst, der als Verbund aus mindestens zwei flexiblen Kunststofffolien und einem zwischen den Folien angeordneten Fühlelement gebildet ist. In einem Ausführungsbeispiel sind die Leiterbahnen auf einer Innenlage einer der selbst wieder als Verbund gebildeten Kunststofffolien angeordnet und mittels Vias mit dem Fühlelement verbunden. Die Leiterbahnen sind durch eine Leitungsdurchführung aus der Halterung geführt oder an einer an der Halterung angeordneten Steckverbindung angelötet. Als besonderer Vorteil der Sensoranordnung wird ihre gute und relativ großflächige Ankopplung zum Rohr genannt, wobei aufgrund des Umstands, dass die Leiterbahnen das Rohr zumindest teilweise umgeben, über die Leiterbahnen die Temperaturermittlung in Umfangsrichtung des Rohrs erfolgen kann. Das Material der Leiterbahnen soll eine hohe Wärmeleitfähigkeit aufweisen.

Die DE 199 36 924 C1 beschreibt einen weiteren sensor der eine leiterplatine umfasst. Die anschlusskontakte sind durch vias mit zwei eingebetteben leiterbahnen elektrisch verburden.

Es ist eine Aufgabe der Erfindung, einen elektrischen Sensor, insbesondere Temperatursensor zu schaffen, der zu einem niedrigen Preis hergestellt werden kann und gegen Umwelteinflüsse weniger empfindlich als bekannte Sensoren mit SMD-Sensorelementen ist.

Die Erfindung geht von einem elektrischen Sensor aus, der eine Leiterplatine mit einer Oberseite und einer der Oberseite abgewandt gegenüber liegenden Unterseite und ein Sensorelement aufweist, dass an einem Ende der Leiterplatine auf deren Oberseite angeordnet ist. Die Oberseite und die Unterseite sind äußere Oberflächen der Leiterplatine. Der Sensor umfasst ferner einen äußeren ersten Anschlusskontakt und einen äußeren zweiten Anschlusskontakt, die an einem anderen Ende der Leiterplatine angeordnet sind. Das Sensorelement ist mittels einer ersten Leiterbahn mit dem ersten Anschlusskontakt und mittels einer zweiten Leiterbahn mit dem zweiten Anschlusskontakt elektrisch verbunden. Die Leiterplatine ist vom Sensorelement aus in Richtung auf die äußeren Anschlusskontakte axial vorzugsweise lang gestreckt mit einer axialen Länge, die ein Mehrfaches der quer dazu gemessenen Breite beträgt. Vorteilhafterweise können die Leiterbahnen daher auch im Falle eines axial geraden Verlaufs ebenfalls lang gestreckt sein, um die Anschlusskontakte vom Sensorelement thermisch zu entkoppeln. Die Ausbildung des Sensorelements als ein im Verhältnis zur Leiterplatine externes, auf- oder angesetztes Sensorelement verringert die Herstellkosten und erleichtert die Herstellung unterschiedlicher Sensoren, da die gleiche Art von Leiterplatinen mit variierenden Sensorelementen oder der Art nach gleiche Sensorelemente mit unterschiedlichen Leiterplatinen der genannten Art flexibel kombiniert und dadurch dem jeweiligen Anwendungsfall angepasste Sensoren herstellbar sind, Sensoren verstanden als Gesamtheit der genannten Bestandteile.

Nach der Erfindung weist die Leiterplatine trotz des außen angeordneten Sensorelements für dessen elektrische Verbindung mit den äußeren Anschlusskontakten zwischen der Oberseite und der Unterseite wenigstens eine Innenlage auf. Die Leiterplatine ist also eine Multilayer-Leiterplatine. Die erste Leiterbahn verläuft auf dieser Innenlage. Die zweite Leiterbahn kann auf der gleichen Innenlage oder auf einer weiteren Innenlage verlaufen. Die Leiterplatine weist in bevorzugten ersten Ausführungen übereinander genau zwei Innenlagen mit vorzugsweise jeweils nur einer der Leiterbahnen und in bevorzugten zweiten Ausführungen nur eine einzige Innenlage mit beiden Leiterbahnen auf. Die elektrischen Verbindungen zwischen dem Sensorelement und den Leiterbahnen einerseits und den Leiterbahnen und den äußeren Anschlusskontakten andererseits werden über zur Ober- und Unterseite zumindest im Wesentlichen orthogonale Verbindungslöcher, sogenannte Vias, verwirklicht. Die empfindlichen Leiterbahnen sind daher vor chemisch aggressiven Medien in der Umgebung und auch schädlichen mechanischen Einflüssen besonders effektiv geschützt, da sie zwischen wenigstens einer die Oberseite bildenden, selbst platinenartigen Substratschicht und wenigstens einer die Unterseite bildenden weiteren, selbst ebenfalls platinenartigen Substratschicht eingebettet sind. Sie müssen für die elektrische Verbindung auch nicht über äußere Seitenflächen der Leiterplatine geführt werden, sondern können in der Leiterplatine, von den Vias abgesehen allseitig von elektrisch isolierendem Substratmaterial umgeben, eingebettet sein.

Die Leiterplatine, das aufgesetzte Sensorelement und die äußeren Anschlusskontakte können mit einem Schutzüberzug, beispielsweise einem Schutzlack oder dergleichen, überzogen sein, für die Leiterbahnen ist solch ein Schutzüberzug jedoch vorteilhafterweise nicht mehr erforderlich. Schutzüberzüge haben sich für viele Anwendungen auch als problematisch erwiesen, beispielsweise hinsichtlich Alterung und Temperaturwechselbeanspruchung. Schutzüberzüge bilden für das Sensorelement einen zusätzlichen thermischen Widerstand und können leicht beschädigt werden, beispielsweise unter Kratzeinwirkung. Da Schutzüberzüge in der Vergangenheit in erster Linie zum Schutz der Leiterbahnen aufgebracht wurden, aufgrund der Erfindung aber ohne weiteres auf einen Schutzüberzug verzichtet werden kann, können die Kosten niedrig gehalten werden.

Die Verbindungslöcher - im folgenden wegen der elektrischen Verbindung "Vias" - können sich von der Oberseite zur Unterseite der Multilayer-Leiterplatine durchgehend erstrecken, also Durchgangslöcher sein. In bevorzugten Ausführungen ist jedoch wenigstens eines der Vias ein in der Leiterplatine endendes Sackloch. Als Sackloch kann insbesondere eines der Vias gebildet sein, die das Sensorelement mit den Leiterbahnen verbinden. Vorzugsweise sind die Vias, die das Sensorelement mit den Leiterbahnen verbinden, ausschließlich Sacklöcher. Das wenigstens eine als Sackloch gebildete Via kann stattdessen aber auch eines der Vias sein, die die Leiterbahnen am anderen Ende der Leiterplatine mit den äußeren Anschlusskontakten verbinden. Es kann auch jedes der die Leiterbahnen mit den Anschlusskontakten verbindenden Vias ein Sackloch sein. Bevorzugt sind wenigstens eines der Vias, die das Sensorelement mit den Leiterbahnen verbinden, und zusätzlich wenigstens eines der die Leiterbahnen mit den äußeren Anschlusskontakten verbindenden Vias jeweils ein Sackloch. Soweit eines oder mehrere der Vias als Sackloch ausgebildet ist oder sind, endet das betreffende Sackloch zweckmäßigerweise auf der wenigstens einen Innenlage oder auf einer der bevorzugt mehreren Innenlagen.

In ebenfalls bevorzugten Ausführungen ist wenigstens eines der Vias ein Durchgangsloch. Als Durchgangsloch kann insbesondere eines der Vias geformt sein, die die Leiterbahnen mit den äußeren Anschlusskontakten verbinden. So entspricht es bevorzugten Ausführungen, wenn die das Sensorelement mit den Leiterbahnen verbindenden Vias Sacklöcher sind, während auf der Seite der äußeren Anschlusskontakte der Art nach unterschiedliche Vias verwirklicht sind, nämlich ein Sackloch für die Verbindung eines der äußeren Anschlusskontakte mit der zugeordneten Leiterbahn und ein Durchgangsloch für die Verbindung des anderen Anschlusskontakts mit der ihm zugeordneten anderen Leiterbahn. Für ein oder mehrere Durchgangsloch/-löcher können insbesondere Kostenvorteile in der Fertigung der Leiterplatine sprechen.

Wenigstens eines der Vias ist ein Micro-Via mit einer Querschnittsfläche von höchstens 0.03 mm² und vorzugsweise wenigstens 0.002 mm². Die Vias sind vorzugsweise kreisrund und zylindrisch, so dass der bevorzugte Größenbereich der Querschnittsfläche bei Ausführung als Micro-Via einem Durchmesser aus dem Bereich von 50 bis 200 µm entspricht. Als Micro-Vias können insbesondere Sacklöcher ausgeführt sein und von diesen wiederum diejenigen, die sich nur durch eine einzige der Substratschichten erstrecken. Soweit eines oder mehrere der Vias jeweils ein Durchgangsloch ist, wird das betreffende Via vorzugsweise mechanisch geformt, vorteilhafterweise gebohrt. Es kann aber auch ein Sackloch oder können mehrere oder alle Sacklöcher der Leiterplatine mechanisch geformt, insbesondere gebohrt sein. Bei Durchkontaktierung mittels Micro-Via kann es von Vorteil sein, wenn die Verbindung einer der Leiterbahnen mit einem der äußeren Anschlusskontakte oder dem Sensorelement, mittels mehrerer Micro-Vias verwirklicht wird.

In Ausführungen, in denen die Multilayer-Leiterplatine zwei oder mehr Innenlagen aufweist, können sich die Leiterbahnen oder kann sich wenigstens eine der Leiterbahnen über mehr als eine Innenlage erstrecken, also einen ersten Bahnabschnitt auf einer der Innenlagen und einen zweiten Bahnabschnitt auf einer anderen der Innenlagen aufweisen. Die auf unterschiedlichen Innenlagen verlaufenden Bahnabschnitte der gleichen Leiterbahn werden durch ein vergrabenes Via miteinander verbunden. Auf diese Weise können die Leiterbahnen oder kann wenigstens eine der Leiterbahnen zwischen dem Sensorelement und den äußeren Anschlusskontakten oder einem der äußeren Anschlusskontakte verlängert werden. Dies kann für die thermische Entkopplung des Sensorelements von Vorteil sein. Die Leiterbahnen oder eine der Leiterbahnen kann auf nur einer oder gegebenenfalls auch mehreren Innenlagen schleifen- oder mäanderförmig verlaufen, um die thermische Entkopplung zu verbessern. Ein mäanderförmiger oder schleifenförmiger Verlauf der Leiterbahnen oder nur einer der Leiterbahnen kann auch in Kombination mit einem Verlauf auf mehreren Innenlagen kombiniert werden. Die Verlagerung der Leiterbahnen von den Außenlagen in eine einzige oder unterschiedliche Innenlage(n) ist auch noch in anderer Hinsicht für die thermische Entkopplung von Sensorelement und äußeren Anschlusskontakten vorteilhaft. Verliefen die Leiterbahnen auf einer oder beiden Außenlagen, würde bei der galvanischen Anreicherung elektrisch leitfähigen Materials in den Vias leitfähiges Material auch die Leiterbahnen verdicken, also auch dort galvanisch angelagert und dadurch die Wärmeleitung über die Leiterbahnen im späteren Einsatz erhöht werden. Durch die Einbettung zwischen Substratschichten wird eine solche Anlagerung verhindert, die als Nebeneffekt einer galvanischen Anreicherung innerhalb der Vias aufträte.

Da die Leiterbahnen von der oder den Außenlage(n) der Leiterplatine in deren Inneres, auf die wenigstens eine Innenlage oder die mehreren Innenlagen, verlagert wurden, kann die Leiterplatine unmittelbar an ihrer Oberseite oder Unterseite mit einer aus elektrisch leitfähigem Material gebildeten Abschirmung gegen elektrische oder elektromagnetische Felder (EMV) versehen werden. Das Wort "oder" wird hier wie auch sonst von der Erfindung im üblichen logischen Sinne eines "inklusiv oder" verstanden, umfasst also sowohl die Bedeutung von "entweder ... oder" als auch die Bedeutung von "und", soweit sich aus dem jeweils konkreten Zusammenhang nicht ausschließlich nur eine dieser beiden Bedeutungen ergeben kann. Bezogen auf die Abschirmung bedeutet dies, dass eine Abschirmung entweder nur auf der Oberseite oder nur auf der Unterseite oder wie bevorzugt sowohl auf der Oberseite als auch auf der Unterseite gebildet sein kann. Die Abschirmung kann auf der Oberseite oder Unterseite insbesondere durch Strukturierung einer zuvor vorhandenen vollflächigen metallischen Beschichtung erzeugt werden, vorzugsweise durch Ätzen. Die Abschirmung kann insbesondere auf der Ober- oder Unterseite linienartig verlaufende Melallstreifen aufweisen oder vorzugsweise von solchen metallischen Linien gebildet werden. Die schmalen, linienartigen Metallstreifen bzw. -fäden bilden vorzugsweise miteinander ein Netz oder Gitter. Die Metallstreifen oder gegebenenfalls auch andere Formelemente der Abschirmung sind so geformt und belegen solch einen Flächenteil der Ober- oder Unterseite, dass einerseits eine ausreichende Abschirmwirkung erzielt, andererseits aber eine ausreichende thermische Entkopplung des Sensorelements von den äußeren Anschlusskontakten gewährleistet wird. Falls eine Abschirmung wie bevorzugt sowohl auf der Oberseite als auch auf der Unterseite der Leiterplatine geformt ist, können die elektrisch leitfähigen Strukturen, die zusammen die Abschirmung bilden, über die Stirnseiten der Leiterplatine durch elektrisch leitfähiges Material vorzugsweise linienartig miteinander verbunden sein, unbedingt erforderlich ist dies wegen der im Vergleich zur Länge und Breite nur geringen Dicke der Leiterplatine jedoch nicht. Eine Abschirmung kann stattdessen oder ergänzend auch auf einer Innenlage der Leiterplatine geformt sein, wobei solch eine der Abschirmung dienende Innenlage vorteilhafterweise von den Leiterbahnen frei und zwischen der Oberseite und den Leiterbahnen oder zwischen der Unterseite und den Leiterbahnen angeordnet ist. Die Leiterbahnen können auch zwischen zwei solchen zusätzlichen Innenlagen, die jeweils eine Abschirmung aus elektrisch leitfähigem Material aufweisen, angeordnet sein. In derartigen Ausführungen schützen die äußeren Substratschichten nicht nur die Leiterbahnen, sondern auch die innlagige Abschirmung.

Die Leiterplatine ist in bevorzugten Ausführungen lang gestreckt, wobei sich die Längsachse vom Sensorelement zu den äußeren Anschlusskontakten erstreckt. Sie weist eine in diese axiale Richtung gemessene Länge von vorzugsweise wenigstens 10 mm und vorzugsweise höchstens 50 mm, eine Breite von vorzugsweise wenigstens 1 mm und vorzugsweise höchstens 5 mm und eine Dicke von vorzugsweise wenigstens 0.1 mm und vorzugsweise höchstens 0.8 mm auf. Die Länge ist vorzugsweise wenigstens fünfmal, bevorzugter wenigstens achtmal größer als die Breite. Die Breite ist vorzugsweise wenigstens dreimal, bevorzugter wenigstens viermal größer als die Dicke.

Die äußeren Anschlusskontakte sind vorzugsweise jeweils als Anschlussflächen auf der Oberseite oder Unterseite der Multilayer-Leiterplatine geformt. Die Vias, die die Leiterbahnen mit den äußeren Anschlusskontakten verbinden, können insbesondere in die Anschlussflächen münden, in der Draufsicht auf die jeweilige Anschlussfläche gesehen vorzugsweise innerhalb deren äußeren Umfangsrands. Die Vias münden vorteilhafterweise aber auch dann in den jeweils zugeordneten äußeren Anschlusskontakt, wenn dieser nicht als flache, zumindest im Wesentlichen nur zweidimensionale Anschlussfläche geformt ist.

Die äußeren Anschlusskontakte können gemeinsam entweder auf der Oberseite oder der Unterseite der Leiterplatine angeordnet sein. Bei gemeinsamer Anordnung auf der gleichen Seite wird es bevorzugt, wenn die Anschlusskontakte auf der gleichen Seite wie das Sensorelement und somit auf der Oberseite der Leiterplatine angeordnet sind. In ebenfalls bevorzugten Ausführungen kann jedoch auch einer der äußeren Anschlusskontakte auf der Oberseite und der andere auf der Unterseite, die Anschlusskontakte einander vorteilhafterweise gegenüberliegend, angeordnet sein.

Für den Anschluss des Sensorelements weist die Multilayer-Leiterplatine auf ihrer Oberseite in bevorzugten Ausführungen Kontaktfelder auf. Das Sensorelement ist vorteilhafterweise unmittelbar auf diesen Kontaktfeldern angeordnet und kann insbesondere auf diese Kontaktfelder gesetzt und mit den Kontaktfeldern elektrisch verbunden sein. Die Vias, die das Sensorelement mit den Leiterbahnen verbinden, münden vorzugsweise in die Kontaktfelder, in der Draufsicht auf die Oberseite gesehen innerhalb des äußeren Umfangsrands der Kontaktfelder.

Die Multilayer-Leiterplatine ist wie bereits erwähnt in bevorzugten Ausführungen vierlagig mit der Oberseite als erster Außenlage, der Unterseite als zweiter Außenlage und zwei dazwischen übereinanderliegenden Innenlagen. Entsprechend kann die Leiterplatine aus drei Substratschichten mit den für die Leiterbahnen und die Anschlussflächen erforderlichen elektrisch leitfähigen Beschichtungen zusammengesetzt sein. Falls eine Abschirmung auf einer Innenlage gewünscht wird, ist solch eine Innenlage vorzugsweise zusätzlich vorhanden und zwischen den Leiterbahnen einerseits und der Oberseite oder Unterseite andererseits angeordnet. Mehr als zwei Innenlagen können aber auch in Ausführungen vorhanden sein, in denen eine der Leiterbahnen oder beide Leiterbahnen jeweils über mehr als eine einzige Innenlage geführt ist oder sind.

Die Leiterplatine kann mittels eines für Multilayer-Leiterplatinen üblichen Fertigungsverfahrens hergestellt werden. Sie kann insbesondere auch aus den üblichen Substraten, also Kunststofflaminaten und Prepregs hergestellt sein, beispielsweise zwei äußeren Prepregs und einem dazwischen angeordneten Laminat oder zwei äußeren Laminaten und einem dazwischen angeordneten Prepreg. Die Abfolge der Substratschichten ist zweckmäßigerweise so, dass auf ein Laminat stets ein Prepreg folgt. Als Substratschicht wird jeweils das elektrisch isolierende Trägermaterial verstanden und, soweit das Trägermaterial mit einem elektrisch leitfähigen Material beschichtet ist, die Kombination aus Trägermaterial und elektrisch leitfähiger Beschichtung. Das einzige Prepreg oder die alternativ mehreren Prepregs kann oder können zweiseitig elektrisch leitfähig, insbesondere metallisch, beschichtet sein. Werden die Oberseite und die Unterseite jeweils von einem Laminat gebildet, können die Laminate jeweils an der Außenseite, die nach dem Verpressen die Oberseite und die Unterseite der Leiterplatine bilden, mit einem elektrisch leitfähigen Material, vorzugsweise metallisch beschichtet sein. Die Leiterbahnen werden durch Strukturierung der elektrisch leitfähigen Beschichtung erhalten. Die optionale Abschirmung kann durch eine entsprechende Strukturierung einer oder mehrerer elektrisch leitfähigen Beschichtung(en), vorzugsweise Metallbeschichtung(en), erhalten werden.

Vorteilhafte Merkmale werden auch in den abhängigen Ansprüchen und deren Kombinationen beschrieben.

Nachfolgend werden Ausführungsbeispiele der Erfindung anhand von Figuren erläutert. An den Ausführungsbeispielen offenbar werdende Merkmale bilden jeweils einzeln und in die Merkmalskombination die Gegenstände der Ansprüche und auch die vorstehend erläuterten Ausführungsformen vorteilhaft weiter. Es zeigen:
- Figur 1: einen Sensor eines ersten Ausführungsbeispiels in einem Längsschnitt,
- Figur 2: den Sensor des ersten Ausführungsbeispiels in einer Draufsicht,
- Figur 3: einen Sensor eines zweiten Ausführungsbeispiels in einem Längsschnitt,
- Figur 4: den Sensor des zweiten Ausführungsbeispiels in einer Draufsicht,
- Figur 5: einen Sensor eines dritten Ausführungsbeispiels in einem Längsschnitt,
- Figur 6: einen Sensor eines vierten Ausführungsbeispiels in einem Längsschnitt und
- Figur 7: eine Abschirmung gegen elektromagnetische Felder am Beispiel des Sensors der Figuren 3 und 4.

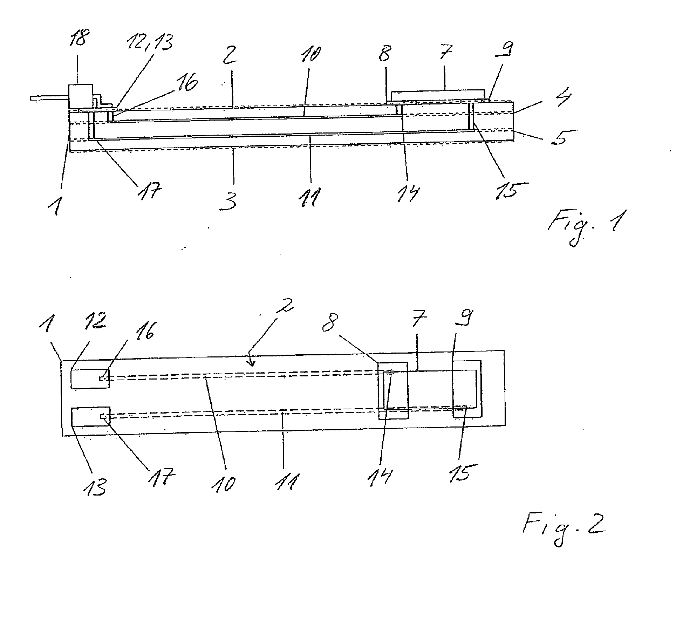

Die Figuren 1 und 2 zeigen einen elektrischen Sensor eines ersten Ausführungsbeispiels, Figur 1 in einem Längsschnitt und Figur 2 in einer Draufsicht. Der Sensor umfasst eine Multilayer-Leiterplatine 1 mit einer Oberseite 2, einer Unterseite 3 und zwischen der Oberseite 2 und der Unterseite 3 übereinander liegenden Innenlagen 4 und 5. Die Oberseite 2 und die Unterseite 3 sind Außenlagen der Leiterplatine 1, die beispielhaft wie bevorzugt vierlagig ausgeführt ist. Die Leiterplatine 1 ist parallel zu einer Längsachse axial langgestreckt. Auf der Oberseite 2 ist an einem der beiden axialen Enden ein Sensorelement 7 und am gegenüberliegenden axialen Ende sind äußere Anschlusskontakte 12 und 13 ebenfalls auf der Oberseite 2 angeordnet. Der Sensor ist über die Anschlusskontakte 12 und 13 mit einer oder mehreren externen elektrischen Baugruppe(n) verbindbar, beispielsweise einer elektronischen Auswerteeinrichtung für die vom Sensorelement 7 gelieferten Messsignale.

Das Sensorelement 7 ist über Kontaktfelder 8 und 9 sowie Leiterbahnen 10 und 11 mit den Anschlusskontakten 12 und 13 elektrisch verbunden. Die äußeren Anschlusskontakte 12 und 13 sind wie die sozusagen inneren Kontaktfelder 8 und 9 unmittelbar auf der Oberseite 2 als flächenhaft erstreckte, flache Anschlussfelder geformt. Das Sensorelement 7 ist in SMD-Bauform ausgeführt und unmittelbar auf die Kontaktfelder 8 und 9 aufgesetzt und mit diesen elektrisch leitend verbunden, beispielsweise verlötet. Auf die Anschlusskontakte 12 und 13 ist eine Anschlusseinrichtung 18, ebenfalls in SMD-Ausführung, aufgesetzt und mit den Anschlusskontakten 12 und 13 elektrisch leitend verbunden, beispielsweise verlötet. Die Anschlusseinrichtung 18 ist als Steckverbinder ausgeführt, beispielhaft handelt es sich um eine zweipolige Stiftleiste in liegender SMD-Bauform.

Der elektrische Sensor ist ein Temperatursensor, das Sensorelement 7 entsprechend ein Temperaturmesselement, vorzugsweise ein temperaturabhängiger Messwiderstand. Es kann sich insbesondere um einen Platin-Messwiderstand handeln, beispielsweise einen Messwiderstand PT500 DIN EN 60751 Klasse F 0,3 in SMD-Bauform 0805.

Die Leiterbahnen 10 und 11 sind auf den Innenlagen 4 und 5 geführt, die Leiterbahn 10 auf der Innenlage 4 und die Leiterbahn 11 auf der nächsten Innenlage 5. Die Leiterbahnen 10 und 11 erstrecken sich ausschließlich auf den Innenlagen 4 und 5. In der Draufsicht der Figur 2 sind die von einer oberen Substratschicht verdeckten Leiterbahnen 10 und 11 strichliniert dargestellt. Die Leiterbahnen 10 und 11 sind nach oben und unten durch die beiden äußeren Substratschichten, die Deckschichten, abgedeckt und verlaufen auch allseits mit einem Abstand von den äußeren Seiten- und Stirnflächen der Leiterplatine 1, so dass sie vor Angriffen aggressiver Gase oder Flüssigkeiten, insbesondere vor korrosiven Medien, und auch gegen mechanische Einwirkungen geschützt sind. Sie sind über vertikale Verbindungslöcher, sogenannte Vias, jeweils mit einem der Kontaktfelder 8 und 9 und einem der äußeren Anschlusskontakte 12 und 13 elektrisch leitend verbunden. So ist das Kontaktfeld 8 über ein Via 14 mit der Leiterbahn 10 und diese über ein Via 16 mit dem Kontaktfeld 12 verbunden. In analoger Weise ist das Kontaktfeld 9 über ein Via 15 mit der Leiterbahn 11 und diese über ein Via 17 mit dem Anschlusskontakt 13 verbunden. Die Vias 14 bis 17 sind jeweils als Sackloch in der Leiterplatine 1 geformt. Die Vias 14 und 16 erstrecken sich jeweils nur durch die oberste der drei Substratschichten, während sich die Vias 15 und 17 jeweils durch die obere und die mittlere Substratschicht erstrecken. Jedes der Vias 14 bis 17 erstreckt sich nur bis zur jeweiligen Innenlage 4 oder 5. Die Vias 14 und 15 münden innerhalb des jeweils zugeordneten Kontaktfelds 8 oder 9, und die Vias 16 und 17 münden innerhalb des jeweils zugeordneten äußeren Anschlusskontakts 12 oder 13.

In der Draufsicht der Figur 2 sind die Kontaktfelder 8 und 9 und die äußeren Anschlusskontakte 12 und 13 als jeweils rechteckige Anschlussflächen zu erkennen. Die Leiterbahnen 10 und 11 sowie Vias 14 bis 17 sind strichliiert angedeutet. Die Leiterbahnen 10 und 11 sind in Dickenrichtung der Leitplatine 1, die Figur 1 zeigt, folienartig dünn und in Breitenrichtung, die Figur 2 zeigt, schmal, um das Sensorelement 7 von dem Anschlussende der Leiterplatine 1, d.h. von den äußeren Anschlusskontakten 12 und 13, thermisch so gut als möglich zu entkoppeln. Die Leiterbahnen 10 und 11 erstrecken sich axial gerade nebeneinander, weisen also in Breitenrichtung voneinander einen Abstand auf, entsprechend den Positionen der auf der gleichen Außenlage, der Oberseite 2, erzeugten Anschlusskontakte 12 und 13. Die Leiterbahnen 10 und 11 könnten alternativ auch beispielsweise in mehreren Schleifen oder mäanderförmig verlaufen, um die thermische Entkopplung noch weiter zu treiben.

Die Leiterplatine 1 weist eine Länge zwischen 20 und 25 mm, eine Breite zwischen 2 und 3 mm und eine Dicke zwischen 0,3 und 0,8 mm auf. Sie ist wie bereits erwähnt vierlagig und dementsprechend dreischichtig mit einer die Oberseite 2 bildenden oberen Deckschicht, einer die Unterseite 3 bildenden unteren Deckschicht und einer dazwischen befindlichen Mittelschicht. Die beiden Deckschichten sind Kunststofflaminate, die Mittelschicht ein Prepreg. Eine Umkehrung der Reihenfolge von Laminat-Prepreg-Laminat auf Prepreg-Laminat-Prepreg ist auch realisierbar. In einem Ausgangszustand weisen die obere Deckschicht an ihrer die Oberseite 2 bildenden Außenseite und die untere Deckschicht an ihrer die Unterseite 3 bildenden Außenseite jeweils eine dünne, elektrisch leitfähige Beschichtung, beispielsweise eine dünne Cu-Schicht auf. Die Mittelschicht ist im Ausgangszustand beidseitig in solch einer Weise beschichtet. Die beiden elektrisch leitenden Außenschichten der Mittelschicht werden strukturiert, beispielsweise fotolithografisch durch Ätzen, und dadurch die Leiterbahn 10 an der Oberseite und die Leiterbahn 11 an der Unterseite der Mittelschicht gebildet. Die Substratschichten werden miteinander verpresst. Vor oder nach dem Verpressen werden die Kontaktfelder 8 und 9 und die Anschlusskontakte 12 und 13 durch Strukturierung der elektrisch leitenden Beschichtung der oberen Deckschicht geformt, beispielsweise fotolithografisch durch Ätzen. Die Vias 14 bis 17 können vor dem Verpressen oder vorzugsweise im verpressten Zustand geformt werden, wobei insbesondere die kurzen Vias 14 und 16, die sich nur durch die obere Deckschicht erstrecken, durch Lasern als Micro-Vias gebildet werden können. Die durch die obere Deckschicht und die Mittelschicht erstreckten Vias 15 und 17 können ebenfalls als Micro-Vias gelasert werden. Die längeren Vias 15 und 17, grundsätzlich aber auch die kurzen Vias 14 und 16, können alternativ auch mechanisch erzeugt werden, insbesondere durch Bohren.

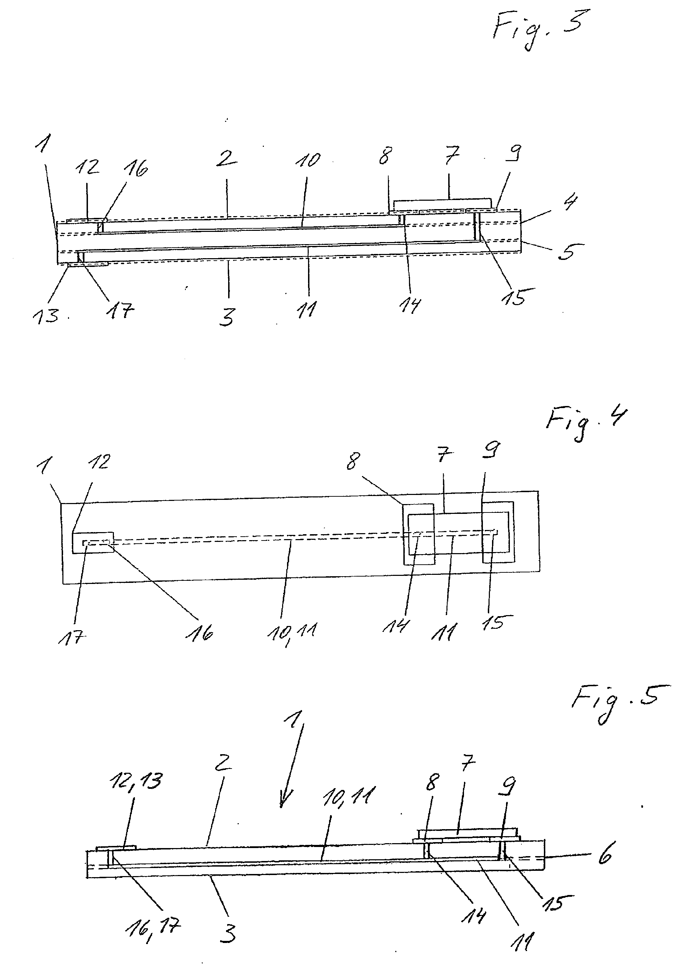

Die Figuren 3 und 4 zeigen einen elektrischen Sensor eines zweiten Ausführungsbeispiels. Der Sensor des zweiten Ausführungsbeispiels ist ebenfalls vierlagig mit zwei übereinander liegenden Innenlagen 4 und 5. Hinsichtlich der Multilayer-Leiterplatine 1 gilt das zum ersten Ausführungsbeispiel Gesagte, ebenso für das Sensorelement 7 und die Kontaktfelder 8 und 9. Im Unterschied zum ersten Ausführungsbeispiel sind die äußeren Anschlusskontakte 12 und 13 einander über die Leiterplatine 1 gegenüberliegend angeordnet, der Anschlusskontakt 12 auf der Oberseite 2 und der Anschlusskontakt 13 auf der Unterseite 3 der Leiterplatine 1. Das Sensorelement 7 ist über das Kontaktfeld 8, das Via 14, die Leiterbahn 10 und das Via 16 wie im ersten Ausführungsbeispiel mit dem auf der Oberseite 2 angeordneten Anschlusskontakt 12 elektrisch leitend verbunden. Im Unterschied zum ersten Ausführungsbeispiel erstreckt sich das die Leiterbahn 11 mit dem Anschlusskontakt 13 verbindende Via 17 entsprechend der Anordnung des Anschlusskontakts 13 auf der Unterseite 3 auf kürzestem Wege nur durch die untere Deckschicht zum Anschlusskontakt 13, um in diesen zu münden und die elektrische Verbindung herzustellen. Das beim Sensorelement 7 vorhandene Via 15 und die Leiterbahn 11 sind dem ersten Ausführungsbeispiel entsprechend gebildet. Die äußeren Anschlusskontakte 12 und 13 können als Lötpads verwendet werden, alternativ kann aber auch dem ersten Ausführungsbeispiel entsprechend eine Anschlusseinrichtung, beispielsweise Steckverbindung oder dergleichen aufgesetzt werden. Wie die Draufsicht der Figur 4 beispielhaft zeigt, verlaufen die Leiterbahnen 10 und 11 im zweiten Ausführungsbeispiel vertikal übereinander in der jeweiligen Innenlage 4 oder 5. Im übrigen gelten die zum ersten Ausführungsbeispiel gemachten Ausführungen.

Figur 5 zeigt einen elektrischen Sensor eines dritten Ausführungsbeispiels, der sich von dem ersten und dem zweiten Ausführungsbeispiel im Wesentlichen dadurch unterscheidet, dass seine Leiterplatine 1 nur dreilagig ist und dementsprechend zwischen der Oberseite 2 und der Unterseite 3 nur eine einzige Innenlage 6 aufweist. Die Leiterbahnen 10 und 11 verlaufen auf dieser einzige Innenlage 6 in einem Abstand nebeneinander und sind wie in den beiden anderen Ausführungsbeispielen dünn, schmal und axial gerade. Sie können auf der Innenlage 6 auch einen anderen Verlauf aufweisen, wie bereits zu dem ersten Ausführungsbeispiel erwähnt, sind aber jedenfalls elektrisch voneinander isoliert. Hinsichtlich des Sensorelements 7 und der dazugehörigen Kontaktfelder 8 und 9 gilt das zum ersten Ausführungsbeispiel Gesagte.

Die äußeren Anschlusskontakte 12 und 13 sind am dem Sensorelement 7 gegenüberliegenden anderen Ende der Leiterplatine 1 wie im ersten Ausführungsbeispiel mit Abstand nebeneinander angeordnet. Sie könnten alternativ auch einander gegenüberliegend wie im zweiten Ausführungsbeispiel angeordnet sein, eines auf der Oberseite 2 und eines auf der Unterseite 3. Die Vias 14 bis 17 erstrecken sich jeweils nur durch eine der beiden Substratschichten der insgesamt nur zweischichtigen Leiterplatine 1, im übrigen gelten die zu den beiden anderen Ausführungsbeispielen bereits gemachten Ausführungen zu deren Vias 14 bis 17 auch für das dritte Ausführungsbeispiel. Insbesondere münden die Vias 14 bis 17 jeweils innerhalb der Kontaktfelder 8 und 9 sowie der äußeren Anschlusskontakte 12 und 13. Von den beiden die Leiterplatine 1 bildenden Ausgangssubstratschichten kann die eine beispielsweise beidseitig elektrisch leitfähig beschichtet und die andere unbeschichtet oder es können beispielsweise beide Substratschichten je einseitig beschichtet sein. Falls das Sensorelement 7 und die Anschlusskontakte 12 und 13 auf unterschiedlichen Seiten der Leiterplatine 1 angeordnet sind, muss die eine der Substratschichten wenigstens eine und die andere Substratschicht auf beiden Seiten jeweils eine elektrisch leitfähige Beschichtung aufweisen. Um Anschlusskontakte 12 und 13 entsprechend dem zweiten Ausführungsbeispiel zu erhalten, können insbesondere ein beidseitig elektrisch leitfähig beschichtetes Prepreg und ein nur einseitig elektrisch leitfähig beschichtetes Kunststofflaminat zur Leiterplatine 1 oder ein beidseitig beschichtetes Kunststofflaminat und ein einseitig elektrisch leitfähig beschichtetes Prepreg miteinander verpresst werden, nachdem die Leiterbahnen 10 und 11 geschaffen wurden.

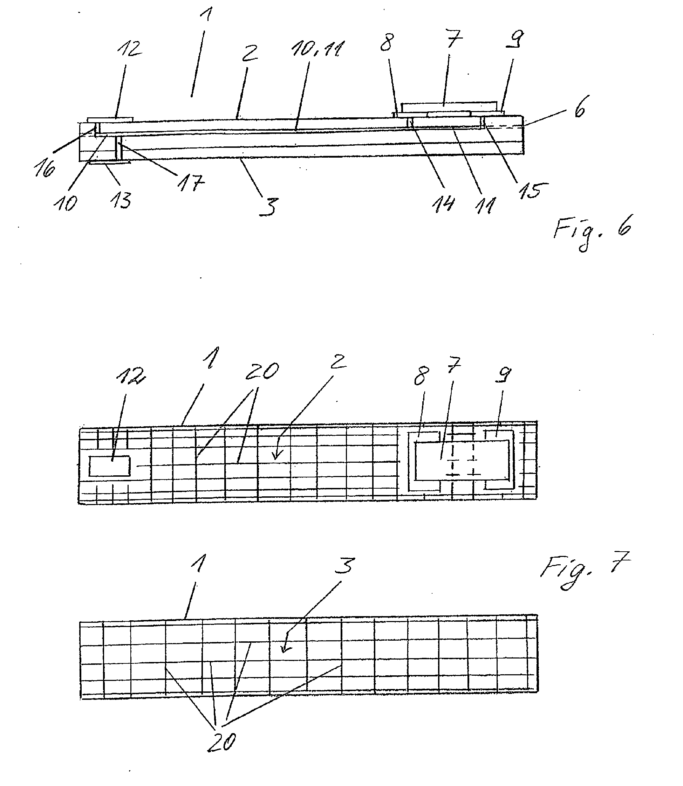

Figur 6 zeigt einen elektrischen Sensor eines vierten Ausführungsbeispiels, bei dem die Leiterbahnen 10 und 11 gemeinsam auf der gleichen Innenlage 6 verlaufen. Die Leiterbahnen 10 und 11 können insbesondere axial gerade und voneinander beabstandet und somit voneinander elektrisch isoliert sein. Die äußeren Anschlusskontakte 12 und 13 sind einander gegenüberliegend angeordnet, der Anschlusskontakt 12 auf der Oberseite 2 und der Anschlusskontakt 13 auf der Unterseite 3. Ein weiterer Unterschied zum dritten Ausführungsbeispiel besteht darin, dass die Leiterplatine 1 aus drei übereinander angeordneten Substratschichten zusammengesetzt ist, entweder in der Abfolge Laminat-Prepreg-Laminat oder bevorzugt in der Abfolge Prepreg-Laminat-Prepreg. Die elektrisch leitfähigen Beschichtung an der Unterseite der Mittelschicht oder der Oberseite der unteren Deckschicht wird vor dem Verpressen der drei Substratschichten vorzugsweise entfernt. Der Aufbau der Leiterplatine 1 aus drei Substratschichten in einer der beiden genannten symmetrischen Abfolgen, symmetrisch in Bezug auf eine in Dickenrichtung gesehen zentrale Längsachse ist vorteilhaft für die Geradheit der Leiterplatine 1 bzw. die Vermeidung von inneren Biegespannungen.

Der Sensor des vierten Ausführungsbeispiels kann abgewandelt werden beispielsweise durch Anordnung der beiden Anschlusskontakte 12 und 13 gemeinsam auf der Oberseite 2 oder, obgleich weniger bevorzugt, gemeinsam auf der Unterseite 3. Die im vierten Ausführungsbeispiel von elektrisch leitfähigem Material freie Innenlage zwischen der Mittelschicht und der unteren Deckschicht kann zur Ausbildung einer Abschirmung gegen elektrische oder elektromagnetische Felder genutzt werden, wie sie nachfolgend für die Oberseite 2 und die Unterseite 3 erläutert wird. Für solch eine Abschirmung wäre es andererseits vorteilhafter, wenn die Leiterbahnen 10 und 11 auf der im vierten Ausführungsbeispiel nicht genutzten Innenlage verliefen und eine Abschirmung auf der oberen Innenlage gebildet würde. Andererseits würde die Verlagerung der Leiterbahnen 10 und 11 auf die hier nicht genutzte untere Innenlage beim Sensorelement 7 entsprechend verlängerte Vias 14 und 15 erforderlich machen.

Die Figur 7 zeigt anhand einer Modifikation des Sensors des zweiten Ausführungsbeispiels, wie unmittelbar auf den Außenseiten der Multilayer-Leiterplatine 1 eine Abschirmung 20 gegen elektrostatische Aufladung sowie elektrische und elektromagnetische Felder geschaffen werden kann. Es handelt sich um ein feines Netz von linienhaften Metallstreifen oder Metalllinien bzw. -fäden. Die Abschirmung 20 wurde durch Strukturierung der elektrisch leitfähige Oberflächenschichten der beiden äußeren Deckschichten der Leiterplatine 1 erhalten, vorzugsweise fotolithographisch durch Ätzen. Wie das Beispiel zeigt, erleichtert die Verlagerung der Leiterbahnen 10 und 11 von der Außenlage 2 oder den beiden Außenlagen 2 und 3 in eine einzige Innenlage 6 oder vorzugsweise in unterschiedliche Innenlagen, beispielsweise die Innenlagen 4 und 5, die Erzeugung einer Abschirmung 20 unmittelbar an bzw. auf der Leiterplatine 1. Solch eine Abschirmung 20 ist insbesondere dann von Vorteil, wenn der elektrische Sensor nicht in eine metallische Schutzhülse eingesetzt wird, sondern beispielsweise eine keramische Schutzhülse, womit auch Glashülsen umfasst sein sollen, oder in eine Kunststoffhülse.

### Bezugszeichen:

- 1: Multilayer-Leiterplatine
- 2: Oberseite
- 3: Unterseite
- 4: Innenlage
- 5: Innenlage
- 6: Innenlage
- 7: Sensorelement
- 8: Kontaktfeld
- 9: Kontaktfeld
- 10: Leiterbahn
- 11: Leiterbahn
- 12: Anschlusskontakt
- 13: Anschlusskontakt
- 14: Via
- 15: Via
- 16: Via
- 17: Via
- 18: Anschlusseinrichtung, Stiftleiste
- 19: -
- 20: Abschirmung

## Patentansprüche

1. Elektrischer Sensor, insbesondere Temperatursensor, umfassend:
a) eine Leiterplatine (1) mit einer Oberseite (2) und einer Unterseite (3), die eine äußere Oberfläche der Leiterplatine (1) zumindest im Wesentlichen bilden,
b) ein an einem Ende der Leiterplatine (1) auf der Oberseite (2) angeordnetes Sensorelement (7), vorzugsweise ein temperaturabhängiger Messwiderstand,
c) einen äußeren ersten Anschlusskontakt (12) und einen äußeren zweiten Anschlusskontakt (13), die an einem anderen Ende der Leiterplatine (1) angeordnet sind,
d) eine erste Leiterbahn (10), die das Sensorelement (7) mit dem ersten Anschlusskontakt (12) elektrisch verbindet, und eine zweite Leiterbahn (11), die das Sensorelement (7) mit dem zweiten Anschlusskontakt (13) elektrisch verbindet,
e) wobei die Leiterplatine (1) wenigstens eine Innenlage (4; 6) aufweist,
f) die erste Leiterbahn (10) auf der Innenlage (4; 6) und die zweite Leiterbahn (11) auf der gleichen Innenlage (6) oder einer optional weiteren Innenlage (5) verläuft
g) und das Sensorelement (7) durch Vias (14, 15) mit den Leiterbahnen (10, 11) elektrisch verbunden ist,
**dadurch gekennzeichnet, dass**
h) die Anschlusskontakte (12, 13) auf der Ober- oder Unterseite (2, 3) der Leiterplatine (1) angeordnet und jeweils durch Vias (16, 17) mit den Leiterbahnen (10, 11) elektrisch verbunden sind
i) und wenigstens eines der Vias (14, 15) als Micro-Via ausgeführt ist mit einem Querschnitt von höchstens 0.03 mm².

2. Elektrischer Sensor nach Anspruch 1, **dadurch gekennzeichnet, dass** wenigstens eines der Vias (14, 15), die das Sensorelement (7) mit den Leiterbahnen (10, 11) verbinden, ein in der Leiterplatine (1) endendes Sackloch ist.

3. Elektrischer Sensor nach einem der vorhergehenden Ansprüche, **dadurch gekennzeichnet, dass** wenigstens eines der Vias (16, 17), die die Anschlusskontakte (12, 13) mit den Leiterbahnen (10, 11) verbinden, ein in der Leiterplatine (1) endendes Sackloch ist.

4. Elektrischer Sensor nach einem der vorhergehenden Ansprüche, **dadurch gekennzeichnet, dass** wenigstens eines der Vias (14-17), vorzugsweise wenigstens eines der die Anschlusskontakte (12, 13) mit den Leiterbahnen (10, 11) verbindenden Vias (16, 17), ein Durchgangsloch ist.

5. Elektrischer Sensor nach einem der vorhergehenden Ansprüche, **dadurch gekennzeichnet, dass** die das Sensorelement (7) mit den Leiterbahnen (10, 11) verbindenden Vias (14, 15) als Micro-Vias ausgeführt sind mit jeweils einem Querschnitt von höchstens 0.03 mm² und vorzugsweise wenigstens 0.002 mm².

6. Elektrischer Sensor nach einem der vorhergehenden Ansprüche, **dadurch gekennzeichnet, dass** wenigstens eines der Vias (14-17), vorzugsweise wenigstens eines der die Anschlusskontakte (12, 13) mit den Leiterbahnen (10, 11) verbindenden Vias (16, 17), eine Bohrung ist.

7. Elektrischer Sensor nach einem der vorhergehenden Ansprüche, **dadurch gekennzeichnet, dass** die Leiterbahnen (10, 11) zwischen den Vias (14, 15) ausschließlich auf den mehreren Innenlagen (4, 5) oder der einzigen Innenlage (6) der Leiterplatine (1) verlaufen.

8. Elektrischer Sensor nach einem der vorhergehenden Ansprüche, **dadurch gekennzeichnet, dass** wenigstens eine der Leiterbahnen (10, 11) einen auf der wenigstens einen Innenlage (4) verlaufenden Leiterbahnabschnitt und einen auf der weiteren Innenlage (5) verlaufenden weiteren Leiterbahnabschnitt aufweist und diese Leiterbahnabschnitte durch ein weiteres Via, vorzugsweise ein vergrabenes Via, elektrisch miteinander verbunden sind.

9. Elektrischer Sensor nach einem der vorhergehenden Ansprüche, **dadurch gekennzeichnet, dass** die Leiterplatine (1) aus einer ungeraden Anzahl von Substratschichten zusammengesetzt ist, die als Trägermaterial jeweils entweder ein Kunststofflaminat oder ein verpresstes Prepreg enthalten, wobei das oder die Kunststofflaminat(e) und das oder die verpresste(n) Prepreg(s) in Dickenrichtung der Leiterplatine (1) in einer alternierenden Abfolge übereinander angeordnet sind.

10. Elektrischer Sensor nach einem der vorhergehenden Ansprüche, **dadurch gekennzeichnet, dass** der Sensor auf der Oberseite (2) oder der Unterseite (3) oder wenigstens einer Innenlage eine aus elektrisch leitfähigem Material gebildete Abschirmung (20) gegen elektrische oder elektromagnetische Felder aufweist und die Abschirmung (20) vorzugsweise eine strukturierte, elektrisch leitfähige Beschichtung (20) ist.

11. Elektrischer Sensor nach dem vorhergehenden Anspruch, **dadurch gekennzeichnet, dass** die Abschirmung (20) auf der Ober- oder Unterseite (2, 3) oder der wenigstens einen Innenlage linienartig verlaufende Metallstreifen umfasst oder aus solchen besteht, die vorzugsweise miteinander ein Netz oder Gitter bilden.

12. Elektrischer Sensor nach einem der vorhergehenden Ansprüche, mit wenigstens einem der folgenden Merkmale:
(i) die Vias (16, 17), die die Leiterbahnen (10, 11) mit den äußeren Anschlusskontakten (12, 13) verbinden, münden in die äußeren Anschlusskontakte (12, 13);
(ii) die das Sensorelement (7) mit den Leiterbahnen (10, 11) verbindenden Vias (14, 15) münden in auf der Oberseite (2) der Leiterplatine (1) angeordneten Kontaktfeldem (8, 9), an die das Sensorelement (7) elektrisch angeschlossen ist.

13. Elektrischer Sensor nach einem der vorhergehenden Ansprüche, **dadurch gekennzeichnet, dass** die zwischen den Enden gemessene Länge der Leiterplatine (1) wenigstens fünfmal, vorzugsweise wenigstens achtmal größer als deren Breite ist.

14. Elektrischer Sensor nach einem der vorhergehenden Ansprüche, **dadurch gekennzeichnet, dass** die Leiterplatine (1) in einer Schutzhülle, vorzugsweise einem Schutzrohr angeordnet ist.

15. Elektrischer Sensor nach einem der vorhergehenden Ansprüche, **dadurch gekennzeichnet, dass** die Leiterplatine (1) drei- oder vierlagig ist mit zwei Außenlagen (2, 3) und einer einzigen oder zwei Innenlage(n) (6; 4, 5), auf der oder auf denen die Leiterbahnen (10, 11) oder jeweils nur eine einzige der Leiterbahnen (10, 11) verlaufen oder verläuft.

## Claims

1. An electrical sensor, in particular a temperature sensor, comprising:
a) a printed circuit board (1) comprising an upper side (2) and a lower side (3) which at least substantially form an exterior surface of the printed circuit board (1);
b) a sensor element (7), preferably a temperature-dependent measuring resistor, which is arranged on the upper side (2) at one end of the printed circuit board (1);
c) a first exterior connecting contact (12) and a second exterior connecting contact (13) which are arranged at another end of the printed circuit board (1);
d) a first PCB track (10) which electrically connects the sensor element (7) to the first connecting contact (12), and a second PCB track (11) which electrically connects the sensor element (7) to the second connecting contact (13),
e) wherein the printed circuit board (1) comprises at least one interior layer (4; 6),
f) the first PCB track (10) extends along the interior layer (4; 6), and the second PCB track (11) extends along the same interior layer (6) or an optionally additional interior layer (5),
g) and the sensor element (7) is electrically connected to the PCB tracks (10, 11) by vias (14, 15),
**characterised in that**
h) the connecting contacts (12, 13) are arranged on the upper or lower side (2, 3) of the printed circuit board (1) and are each electrically connected to the PCB tracks (10, 11) by vias (16, 17),
i) and at least one of the vias (16, 17) is embodied as a micro via which exhibits a cross-section of at most 0.03 mm².

2. The electrical sensor according to Claim 1, **characterised in that** at least one of the vias (14, 15) which connect the sensor element (7) to the PCB tracks (10, 11) is a blind hole which terminates in the printed circuit board (1).

3. The electrical sensor according to any one of the preceding claims, **characterised in that** at least one of the vias (16, 17) which connect the connecting contacts (12, 13) to the PCB tracks (10, 11) is a blind hole which terminates in the printed circuit board (1).

4. The electrical sensor according to any one of the preceding claims, **characterised in that** at least one of the vias (14-17), preferably at least one of the vias (16, 17) which connect the connecting contacts (12, 13) to the PCB tracks (10, 11), is a transit hole.

5. The electrical sensor according to any one of the preceding claims, **characterised in that** the vias (14, 15) which connect the sensor element (7) to the PCB tracks (10, 11) are embodied as micro vias which exhibit a cross-section of at most 0.03 mm² each and preferably at least 0.002 mm² each.

6. The electrical sensor according to any one of the preceding claims, **characterised in that** at least one of the vias (14-17), preferably at least one of the vias (16, 17) which connect the connecting contacts (12, 13) to the PCB tracks (10, 11), is a drilled hole.

7. The electrical sensor according to any one of the preceding claims, **characterised in that** the PCB tracks (10, 11) between the vias (14, 15) extend solely along the one interior layer (6) or multiple interior layers (4, 5) of the printed circuit board (1).

8. The electrical sensor according to any one of the preceding claims, **characterised in that** at least one of the PCB tracks (10, 11) comprises one PCB track portion which extends along the at least one interior layer (4) and another PCB track portion which extends along the other interior layer (5) and **in that** these PCB track portions are electrically connected to each other by another via, preferably a buried via.

9. The electrical sensor according to any one of the preceding claims, **characterised in that** the printed circuit board (1) is composed of an odd number of substrate layers which each contain either a plastic laminate or a press-fitted prepreg as the substrate material, wherein the plastic laminate(s) and the press-fitted prepreg(s) are arranged one on top of the other in an alternating sequence in the thickness direction of the printed circuit board (1).

10. The electrical sensor according to any one of the preceding claims, **characterised in that** the sensor on the upper side (2) or the lower side (3) or at least one interior layer comprises a shield (20) against electrical or electromagnetic fields which is formed from electrically conductive material and is preferably a structured, electrically conductive coating (20).

11. The electrical sensor according to the preceding claim, **characterised in that** the shield (20) on the upper or lower side (2, 3) or the at least one interior layer comprises or consists of linearly extending metal strips which together preferably form a network or grid.

12. The electrical sensor according to any one of the preceding claims, comprising at least one of the following features:
(i) the vias (16, 17) which connect the PCB tracks (10, 11) to the exterior connecting contacts (12, 13) feed into the exterior connecting contacts (12, 13);
(ii) the vias (14, 15) which connect the sensor element (7) to the PCB tracks (10, 11) feed into contact fields (8, 9) which are arranged on the upper side (2) of the printed circuit board (1) and to which the sensor element (7) is electrically connected.

13. The electrical sensor according to any one of the preceding claims, **characterised in that** the length of the printed circuit board (1) as measured between its ends is at least five times, preferably at least eight times, larger than its width.

14. The electrical sensor according to any one of the preceding claims, **characterised in that** the printed circuit board (1) is arranged in a protective sheath, preferably a protective tube.

15. The electrical sensor according to any one of the preceding claims, **characterised in that** the printed circuit board (1) has three or four layers, comprising two exterior layers (2, 3) and one or two interior layer(s) (6; 4, 5) along which the PCB tracks (10, 11) run or along each of which only one of the PCB tracks (10, 11) runs.

## Revendications

1. Capteur électrique, en particulier capteur de température, comportant :
a) une carte à circuit imprimé (1) ayant un côté supérieur (2) et un côté inférieur (3) qui forment au moins sensiblement une surface extérieure de la carte à circuit imprimé (1),
b) un élément de capteur (7), de préférence une résistance de mesure variable avec la température, agencé sur le côté supérieur (2) à une extrémité de la carte à circuit imprimé (1),
c) un premier contact de connexion extérieur (12) et un second contact de connexion extérieur (13) qui sont agencés à une autre extrémité de la carte à circuit imprimé (1),
d) un premier trajet de conduction (10) qui relie électriquement l'élément de capteur (7) au premier contact de connexion (12), et un second trajet de conduction (11) qui relie électriquement l'élément de capteur (7) au second contact de connexion (13),
e) dans lequel la carte à circuit imprimé (1) comporte au moins une couche intérieure (4 ; 6),
f) le premier trajet de conduction (10) s'étend sur la couche intérieure (4 ; 6) et le second trajet de conduction (11) s'étend sur la même couche intérieure (6) ou une couche intérieure supplémentaire facultative (5),
g) et l'élément de capteur (7) est électriquement relié aux trajets de conduction (10, 11) par des traversées (14, 15),
**caractérisé en ce que**
h) les contacts de connexion (12, 13) sont agencés sur le côté supérieur ou inférieur (2, 3) de la carte à circuit imprimé (1) et sont respectivement reliés électriquement aux trajets de conduction (10, 11) par des traversées (16, 17),
i) et au moins une des traversées (14, 15) est réalisée sous forme de microtraversées ayant une section transversale d'au plus 0,03 mm².

2. Capteur électrique selon la revendication 1, **caractérisé en ce qu'**au moins une des traversées (14, 15) reliant l'élément de capteur (7) aux trajets de conduction (10, 11) est un trou borgne se terminant dans la carte à circuit imprimé (1).

3. Capteur électrique selon l'une quelconque des revendications précédentes, **caractérisé en ce qu'**au moins une des traversées (16, 17) reliant les contacts de connexion (12, 13) aux trajets de conduction (10, 11) est un trou borgne se terminant dans la carte à circuit imprimé (1).

4. Capteur électrique selon l'une quelconque des revendications précédentes, **caractérisé en ce qu'**au moins une des traversées (14 à 17), de préférence au moins une des traversées (16, 17) reliant les contacts de connexion (12, 13) aux trajets de conduction (10, 11), est un trou traversant.

5. Capteur électrique selon l'une quelconque des revendications précédentes, **caractérisé en ce que** les traversées (14, 15) reliant l'élément de capteur (7) aux trajets de conduction (10, 11) sont réalisées sous forme de microtraversées ayant respectivement une section transversale d'au plus 0,03 mm² et de préférence d'au moins 0,002 mm².

6. Capteur électrique selon l'une quelconque des revendications précédentes, **caractérisé en ce qu'**au moins une des traversées (14 à 17), de préférence au moins une des traversées (16, 17) reliant les contacts de connexion (12, 13) aux trajets de conduction (10, 11), est un perçage.

7. Capteur électrique selon l'une quelconque des revendications précédentes, **caractérisé en ce que** les trajets de conduction (10, 11) entre les traversées (14, 15) s'étendent exclusivement sur la pluralité de couches intérieures (4, 5) ou sur la couche intérieure unique (6) de la carte à circuit imprimé (1).

8. Capteur électrique selon l'une quelconque des revendications précédentes, **caractérisé en ce qu'**au moins un des trajets de conduction (10, 11) comporte une partie de trajet de conduction s'étendant sur la au moins une couche intérieure (4) et une partie de trajet de conduction supplémentaire s'étendant sur la couche intérieure supplémentaire (5), et ces parties de trajet de conduction sont électriquement reliées l'une à l'autre par une traversée supplémentaire, de préférence une traversée enterrée.

9. Capteur électrique selon l'une quelconque des revendications précédentes, **caractérisé en ce que** la carte à circuit imprimé (1) est assemblée à partir d'un nombre impair de couches de substrat qui contiennent respectivement soit un stratifié en matière plastique, soit un préimprégné comprimé en tant que matériau de support, dans lequel le ou les stratifiés en matière plastique et le ou les préimprégnés comprimés sont agencés les uns au-dessus des autres en séquence alternée dans une direction d'épaisseur de la carte à circuit imprimé (1).

10. Capteur électrique selon l'une quelconque des revendications précédentes, **caractérisé en ce que** le capteur sur le côté supérieur (2) ou le côté inférieur (3) ou au moins une couche intérieure comporte un blindage (20) contre les champs électriques ou électromagnétiques, formé d'un matériau électriquement conducteur, et le blindage (20) est de préférence un revêtement structuré (20), électriquement conducteur.

11. Capteur électrique selon la revendication précédente, **caractérisé en ce que** le blindage (20) sur le côté supérieur ou inférieur (2, 3) ou la au moins une couche intérieure inclut des bandes métalliques s'étendant linéairement ou est constitué de celles-ci, lesquelles bandes forment ensemble de préférence un réseau ou un treillis.

12. Capteur électrique selon l'une quelconque des revendications précédentes, présentant au moins une des caractéristiques suivantes :
(i) les traversées (16, 17) reliant les trajets de conduction (10, 11) aux contacts de connexion extérieurs (12, 13) débouchent dans les contacts de connexion extérieurs (12, 13),
(ii) les traversées (14, 15) reliant l'élément de capteur (7) aux trajets de conduction (10, 11) débouchent dans des zones de contact (8, 9) agencées sur le côté supérieur (2) de la carte à circuit imprimé (1), zones de contact auxquelles l'élément de capteur (7) est électriquement connecté.

13. Capteur électrique selon l'une quelconque des revendications précédentes, **caractérisé en ce que** la longueur de la carte à circuit imprimé (1) mesurée entre les extrémités est au moins cinq fois, de préférence au moins huit fois, plus grande que sa largeur.

14. Capteur électrique selon l'une quelconque des revendications précédentes, **caractérisé en ce que** la carte à circuit imprimé (1) est agencée dans une enveloppe de protection, de préférence un tube de protection.

15. Capteur électrique selon l'une quelconque des revendications précédentes, **caractérisé en ce que** la carte à circuit imprimé (1) comporte trois ou quatre couches avec deux couches extérieures (2, 3) et une couche intérieure unique ou deux couches intérieures (6 ; 4, 5) sur laquelle ou sur lesquelles s'étendent les trajets de conduction (10, 11) ou s'étend respectivement un seul des trajets de conduction (10, 11).
